# EUROPEAN PATENT APPLICATION

(11) **EP 4 439 758 A1**
(43) Date of publication of application: **02.10.2024**
(21) Application number: 24166052.1
(22) Date of filing: 25.03.2024
(51) Int. Cl.: H01M 10/052, H01M 10/6554, H01M 50/143, H01M 50/213, H01M 50/383

(54) **BATTERY PACK**

(30) Priority: 26.03.2023 KR 20230039399; 17.08.2023 KR 20230107857
(71) Applicant: Samsung SDI Co., Ltd., Yongin-si, Gyeonggi-do 17084 (KR)
(72) Inventor: KIM, Donghyeong, 17084 Yongin-si (KR); KIM, Beomjoo, 17084 Yongin-si (KR)
(74) Representative: Marks & Clerk LLP

(57) **Abstract**

A battery pack includes: a case; a battery cell accommodated at an upper position in the case in a gravity direction; a gas outlet between the battery cell and the case at a lower position of the case and facing a vent portion of the battery cell; and a fireproof fire-extinguishing layer between the battery cell and the gas outlet.

## Description

### BACKGROUND

### 1. Field

Aspects of embodiments of the present disclosure relate to a battery pack.

### 2. Description of the Related Art

Lithium batteries generally refer to batteries using various types of lithium compounds. Lithium batteries are used in various ways due to having higher energy densities than lead-acid batteries. Battery packs include a plurality of battery cells. Battery packs have been widely employed in home appliances, electric vehicles, hybrid vehicles, etc.

Battery packs may overheat due to electrical or physical shocks in charging/discharging of battery cells, and fire or explosions may occur due to the overheating. If an event caused by overheating occurs in any one cell of a battery pack including a plurality of cells, heat needs to be effectively blocked before transferring to a nearby cell. To this end, a cell in a battery pack may include a vent portion for discharging heat and gas generated due to an event to the outside of the cell. If fire or flames discharged through the vent portion are transferred to a neighboring cell, a big fire or explosion may occur.

For example, in comparison to a 21700 battery cell, widely used at present, if a thermal runaway event occurs, a newly designed 4680 battery cell may generate heat at a level six times that generated by the 21700 battery cell. A urethane foam potting structure employed as a heat dissipation structure in the related art has heat resistance at a level of 150 °C but needs to be improved because high heat at a temperature of about 500 °C or higher is generated if a fire occurs inside the battery pack.

### SUMMARY

Embodiments of the present disclosure include a battery pack having an improved internal structure to effectively prevent heat from propagating to a nearby cell if fire occurs in one cell.

Additional aspects and features will be set forth, in part, in the description which follows and, in part, will be apparent from the description or may be learned by practice of the described embodiments of the present disclosure.

According to an embodiment of the present disclosure, a battery pack includes: a case; a battery cell accommodated at an upper position in the case in a gravity direction; a gas outlet between the battery cell and the case at a lower position of the case and facing a vent portion of the battery cell; and a fireproof fire-extinguishing layer between the battery cell and the gas outlet.

The fireproof fire-extinguishing layer may include fireproof paint.

The fireproof fire-extinguishing layer may be configured to foam in (e.g. expand) when exposed to high temperatures to block introduction of air from an ignition point.

The vent portion may be at a lower end portion of the battery cell.

The battery pack may further include a thermal-insulating member between the battery cell and the gas outlet.

The fireproof fire-extinguishing layer may be on the thermal-insulating member.

The fireproof fire-extinguishing layer may be on an inner surface of the thermal-insulating member, and the inner surface may face the battery cell.

The fireproof fire-extinguishing layer may be on an outer surface of the thermal-insulating member, and the outer surface may oppose the battery cell.

The battery cell may be a cylindrical battery cell having a circular cross-section.

The battery cell may be a prismatic battery cell, the battery pack may further comprise a cooling plate arranged under the battery cell, the gas outlet may be between the battery cell and the cooling plate, and the fireproof fire-extinguishing layer may be under the battery cell to cover the vent portion.

At least some of the above and other features of the invention are set out in the claims.

### BRIEF DESCRIPTION OF THE DRAWINGS

The above and other aspects and features of embodiments of the present disclosure will be more apparent from the following description taken in conjunction with the accompanying drawings, in which:
FIG. 1 shows a cross-sectional structure of a battery pack according to an embodiment of the present disclosure;
FIG. 2 shows a cross-sectional structure of a battery pack according to another embodiment of the present disclosure;
FIG. 3 shows a cross-sectional structure of a battery pack according to another embodiment of the present disclosure;
FIG. 4 schematically shows a state in which a fireproof fire-extinguishing layer blocks flame propagation to a nearby cell when an event occurs inside the battery pack shown in FIG. 1;
FIG. 5 schematically shows a state in which flame propagation to a nearby cell is blocked by foaming of a fireproof fire-extinguishing layer when an event occurs inside the battery pack shown in FIG. 1;
FIG. 6 schematically shows a state in which, when an event occurs inside the battery pack shown in FIG. 1, a battery cell is supported and heat conduction to a case is induced due to foaming of a fireproof fire-extinguishing layer; and
FIG. 7 shows a structure of a battery pack including a prismatic battery cell according to other embodiments of the present disclosure.

### DETAILED DESCRIPTION

Reference will now be made, in detail, to embodiments, examples of which are illustrated in the accompanying drawings. In this regard, the described embodiments may have different forms and should not be construed as being limited to the descriptions set forth herein. Accordingly, embodiments are merely described below, by referring to the figures, to explain aspects and features of the present description.

Hereinafter, embodiments of the present disclosure will be described, in detail, with reference to the attached drawings to allow those of ordinary skill in the art to easily carry out the embodiments of the present disclosure. However, the present disclosure may be implemented in various different forms and is not limited to the embodiments described herein. In addition, in describing embodiments of the present disclosure in detail, when it is determined that a detailed description of a related known function or configuration may unnecessarily obscure the gist of the present disclosure, such detailed description may be omitted.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

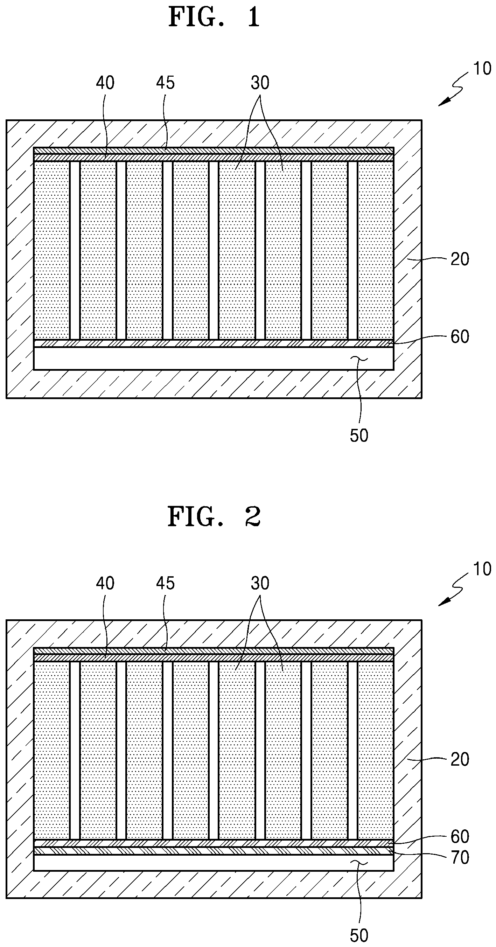

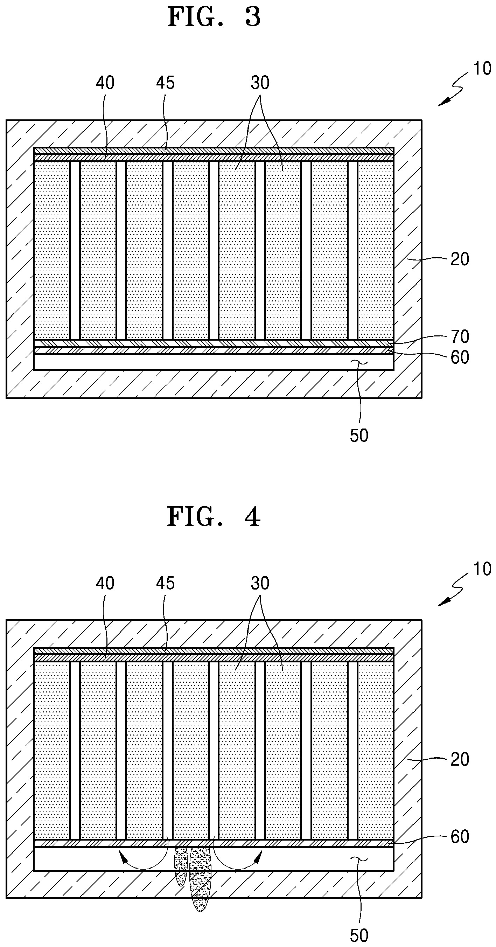

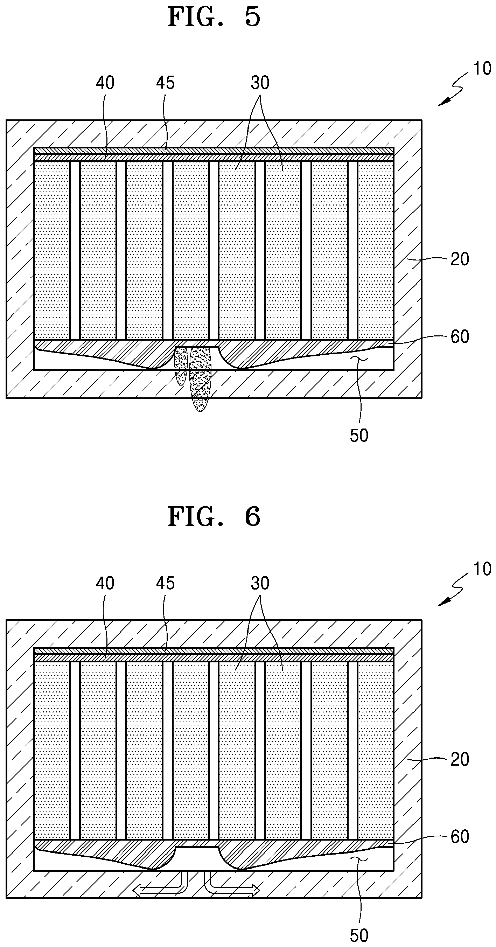

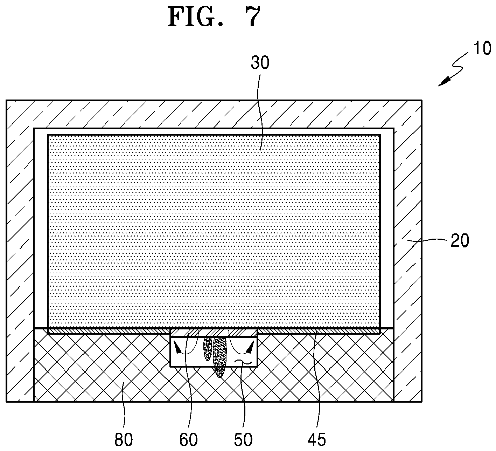

FIG. 1 shows a cross-sectional structure of a battery pack according to an embodiment of the present disclosure. FIG. 2 shows a cross-sectional structure of a battery pack according to another embodiment of the present disclosure. FIG. 3 shows a cross-sectional structure of a battery pack according to another embodiment of the present disclosure. FIG. 4 schematically shows a state in which a fireproof fire-extinguishing layer blocks flame propagation to a nearby cell when an event occurs inside the battery pack shown in FIG. 1. FIG. 5 schematically shows a state in which flame propagation to a nearby cell is blocked by foaming of a fireproof fire-extinguishing layer when an event occurs inside the battery pack shown in FIG. 1. FIG. 6 schematically shows a state in which, when an event occurs inside the battery pack shown in FIG. 1, a battery cell is supported and heat conduction to a case is induced by foaming of a fireproof fire-extinguishing layer foaming. FIG. 7 shows a structure of a battery pack including a prismatic battery cell according to other embodiments of the present disclosure.

Referring to FIGS. 1 to 6, a battery pack 10, according to embodiments of the present disclosure, may include a case 20, a battery cell 30, a cell fixing mold 40, a gas outlet 50, a fireproof fire-extinguishing layer 60, and a thermal-insulating member 70.

The case 20 may be a structure having a space therein. The case 20 may be manufactured by using a metal material, such as aluminium, iron, etc. The case 20 may be a structure accommodating the battery cell 30, described later.

The case 20 may have, for example, a rectangular parallelepiped box shape.

The battery cell 30 may be installed inside the case 20. The battery cell 30 may be a cylindrical battery cell having a circular cross-section. A plurality of the battery cells 30 may be provided inside the case 20. The battery cell 30 may be arranged upwardly in the case 20 in the direction of gravity. For example, the battery cell 30 may be accommodated at an upper position in the case 20 in the direction of gravity. The battery cell 30 may be arranged such that an upper portion thereof is fixed to the case 20. The battery cell 30 may be fixed to an upper portion of the case 20 by the cell fixing mold 40, which may be made of a synthetic resin. A bus bar electrically connecting the plurality of battery cells 30 together may be coupled to the cell fixing mold 40. An insulator 45 may be arranged between the cell fixing mold 40 and the case 20 to maintain an electrical insulation state.

The battery cell 30 may include a vent portion. The vent portion may be a structure that discharges gas to outside of the battery cell 30 if gas or heat is generated inside the battery cell 30. The vent portion may be configured to discharge gas downwardly from the battery cell 30. For example, the vent portion may be formed at a lower end portion of the battery cell 30.

The gas outlet 50 may be formed between the battery cell 30 and the case 20. The gas outlet 50 may be arranged under the battery cell 30 to face the vent portion of the battery cell 30. The gas outlet 50 may be a space formed between a lower portion of the battery cell 30 and the case 20.

The fireproof fire-extinguishing layer 60 may be formed between the battery cell 30 and the gas outlet 50. The fireproof fire-extinguishing layer 60 may include fireproof paint. The fireproof paint may contain epoxy resin. One of commercially used architectural fireproof paints may be employed.

The fireproof fire-extinguishing layer 60 may have high-temperature foaming characteristics to block introduction of air from an ignition point. For example, the fireproof fire-extinguishing layer 60 may expand in a range of about 80 to about 100 times while producing carbonized materials and incombustible gas at about 250 °C or higher. The fireproof fire-extinguishing layer 60 may start foaming after about 10 minutes or more from combustion and may completely foam after an elapse of about 30 minutes or more. A heat conductivity of the fireproof fire-extinguishing layer 60 before foaming is in a range of about 0.1 Kcal/mh°C to about 0.3 Kcal/mh°C, and the heat conductivity after foaming is in a range of about 0.01 Kcal/mh°C to about 0.03 Kcal/mh°C. Even if the fireproof fire-extinguishing layer 60 does not foam, the fireproof fire-extinguishing layer 60 has a heat conductivity at a level similar to a Mica sheet, which is currently used in a related art battery pack, such that thermal insulation performance at a Mica level may be expected at the beginning of flaming. If the battery pack 10 is aflame, the fireproof fire-extinguishing layer 60 may perform a role over that of (e.g., greater than that of) aerogel. Even if the fireproof fire-extinguishing layer 60 is applied in a thickness of about 0.5 mm, the fireproof fire-extinguishing layer 60 may be thickened to a level of about 10 times its initial thickness after foaming, thereby securing sufficiently high thermal insulation performance from a cell vent portion to the case. The fireproof fire-extinguishing layer 60 may be applied to a prismatic battery cell as well as a cylindrical battery cell. The fireproof fire-extinguishing layer 60 may have a form covering (e.g., may cover) the vent portion of the battery cell 30.

The thermal-insulating member 70 may be arranged between the battery cell 30 and the gas outlet 50. The thermal-insulating member 70 may include the fireproof fire-extinguishing layer 60. The fireproof fire-extinguishing layer 60 may be formed on the thermal-insulating member 70. For example, the fireproof fire-extinguishing layer 60 may be formed on an inner surface of the thermal-insulating member 70, where the inner surface thereof faces the battery cell 30. The fireproof fire-extinguishing layer 60 may be formed on an outer surface of the thermal-insulating member 70, where the outer surface thereof opposes (e.g., faces away from) the battery cell 30.

Hereinafter, the working effects of the battery pack 10 including at least some of the components described above will be described using an example of a combustion event occurring in the battery cell 30 of the battery pack 10.

Referring to FIG. 4, if the combustion event occurs in any one battery cell 30 in the battery pack 10, and even if flame erupts at the gas outlet 50 formed under the vent portion, the flame may be dissolved through the gas outlet 50 without propagating to the nearby battery cell 30 due to a thermal insulation action of the fireproof fire-extinguishing layer 60.

Referring to FIG. 5, if the combustion event occurs in any one battery cell 30 in the battery pack 10, the fireproof fire-extinguishing layer 60 may expand at (e.g., when exposed to) a high temperature of about 300 °C or higher such that a heat absorption action may be performed and internal heat energy of the battery pack 10 may be reduced. The fireproof fire-extinguishing layer 60, which has the expanding volume, may form a carbonized layer and may prevent air introduction by forming a donut-shape structure.

Referring to FIG. 6, if the combustion event occurs in any one battery cell 30 in the battery pack 10, the fireproof fire-extinguishing layer 60 may expand at high temperature to transfer (or to direct) the flame to or toward the case 20, thereby forming a heat dissipation path. Even if the cell fixing mold 40 arranged on the battery cell 30 collapses due to high temperature from combustion, the fireproof fire-extinguishing layer 60 may expand to support the lower portion of the battery cell 30, thereby preventing an arrangement structure of the battery cell 30 from collapsing.

FIG. 7 is a cross-sectional view of a battery pack showing a structure according to another embodiment of the present disclosure. Referring to FIG. 7, a plurality of prismatic battery cells 30 may be arranged to be electrically connected to one another inside the case 20. A cooling plate 80 may be arranged under the battery cell 30. The insulator 45 may be arranged between the cooling plate 80 and the lower portion (or lower surface) of the battery cell 30. The gas outlet 50 may be provided between the lower portion of the battery cell 30 and the cooling plate 80. The fireproof fire-extinguishing layer 60 may be formed to cover the vent portion under the battery cell 30. If the fire event occurs in any one battery cell 30, flame propagation to a nearby cell may be effectively blocked by the fireproof fire-extinguishing layer 60. The fireproof fire-extinguishing layer 60 may expand at high temperature to provide heat absorption and block air introduction.

As described above, in the battery pack according to embodiments of the present disclosure, the fireproof fire-extinguishing layer may endure high heat about 1000 °C or higher, thereby blocking heat propagation to a nearby cell even if combustion occurs in one cell.

The fireproof fire-extinguishing layer may provide a heat absorption action by expanding at a high temperature if fire occurs, thereby lowering internal temperature of the battery pack upon occurrence of an event.

The fireproof fire-extinguishing layer may also support the battery cell by expanding at high temperature even if the mold for supporting the battery cell collapses.

While the present disclosure has been described in detail with respect to embodiments thereof, the present disclosure is not limited to the above embodiments. It may be apparent that many variations are possible within the technical idea of the present disclosure by those of ordinary skill in the art.

In the battery pack according to embodiments of the present disclosure, the fireproof fire-extinguishing layer may endure high heat above about 1000 °C or higher, thereby blocking heat propagation to a nearby cell even if combustion occurs in one cell.

The fireproof fire-extinguishing layer may provide a heat absorption action by expanding at a high temperature if fire occurs, thereby lowering internal temperature of the battery pack upon occurrence of an event.

The fireproof fire-extinguishing layer may also support the battery cell by expanding at high temperature even if the mold for supporting the battery cell collapses.

It should be understood that embodiments described herein should be considered in a descriptive sense and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the present disclosure as defined by the following claims and their equivalents.

## Claims

1. A battery pack comprising:
a case;
a battery cell accommodated at an upper position in the case in a gravity direction;
a gas outlet between the battery cell and the case at a lower position of the case and facing a vent portion of the battery cell; and
a fireproof fire-extinguishing layer between the battery cell and the gas outlet.

2. The battery pack as claimed in claim 1, wherein the fireproof fire-extinguishing layer comprises fireproof paint.

3. The battery pack as claimed in claim 1 or claim 2, wherein the fireproof fire-extinguishing layer is configured to expand when exposed to certain temperatures to block introduction of air from an ignition point.

4. The battery pack as claimed in any one of claims 1 to 3, wherein the vent portion is at a lower end portion of the battery cell.

5. The battery pack as claimed in any one of claims 1 to 4, further comprising a thermal-insulating member between the battery cell and the gas outlet.

6. The battery pack as claimed in claim 5, wherein the fireproof fire-extinguishing layer is on the thermal-insulating member.

7. The battery pack as claimed in claim 6, wherein the fireproof fire-extinguishing layer is on an inner surface of the thermal-insulating member, the inner surface facing the battery cell.

8. The battery pack as claimed in claim 6, wherein the fireproof fire-extinguishing layer is on an outer surface of the thermal-insulating member, the outer surface opposing the battery cell.

9. The battery pack as claimed in any one of claims 1 to 8, wherein the battery cell is a cylindrical battery cell having a circular cross-section.

10. The battery pack as claimed in claim 1, wherein the battery cell is a prismatic battery cell, the battery pack further comprises a cooling plate arranged under the battery cell, the gas outlet is between the battery cell and the cooling plate, and the fireproof fire-extinguishing layer is under the battery cell to cover the vent portion.
